# EUROPEAN PATENT APPLICATION

(11) **EP 4 757 443 A1**
(43) Date of publication of application: **10.06.2026**
(21) Application number: 24851354.1
(22) Date of filing: 21.05.2024
(51) Int. Cl.: H04W 56/00, H04W 4/38, H04W 52/02

(54) **REMOTE WIRELESS DEVICE AND WIRELESS COMMUNICATION SYSTEM**

(30) Priority: 04.08.2023 JP 2023127474
(71) Applicant: SMC Corporation, Tokyo 104-0031 (JP)
(72) Inventor: GANDO Takashi, Tsukubamirai-shi, Ibaraki 300-2493 (JP); KUWAHARA Toshiaki, Tsukubamirai-shi, Ibaraki 300-2493 (JP)
(74) Representative: Keil & Schaafhausen Patentanwälte PartGmbB
(86) International application number: PCT/JP2024/018661
(87) International publication number: WO 2025/032920

(57) **Abstract**

In order to maintain synchronization of wireless communication, a remote wireless device (20) is provided with: a communication unit (120) whereby a synchronization maintenance signal (SM) transmitted from a base wireless device (10) in a transmission cycle (Tt) which is a plurality of times the length of a predetermined cycle (Tu) is received in a reception cycle (Tr) which is a predetermined number (N) of times the length of the transmission cycle (Tt); and a synchronization unit (122) that maintains the synchronization. The predetermined number is an integer of 1 or more. The reception cycle is the sum of a first period (T1) in which the communication unit receives the synchronization maintenance signal and a second period (T2) in which the communication unit does not receive the synchronization maintenance signal. The first period is a period including one or more of the predetermined cycles included in the reception cycle.

## Description

### TECHNICAL FIELD

The present invention relates to a remote wireless device and a wireless communication system.

### BACKGROUND ART

JP 2021-190855 A discloses a wireless sensor terminal that can operate in a mode with low power consumption. The wireless sensor terminal periodically searches for and receives a control signal from a base station. The wireless sensor terminal periodically suspends the base station search when operating in the low power mode.

### SUMMARY OF THE INVENTION

According to the disclosure of JP 2021-190855 A, when a control signal is transmitted from a base station during a period in which the wireless sensor terminal is suspending the base station search, the wireless sensor terminal cannot receive the control signal.

The present invention has the object of solving the aforementioned problems.

A first aspect of the present invention is characterized by a remote wireless device that is capable of transmitting and receiving signals to and from a base wireless device in a predetermined cycle by way of wireless communication, the remote wireless device including a communication unit configured to receive a synchronization maintenance signal transmitted from the base wireless device in a transmission cycle that is a multiple of the predetermined cycle, in a reception cycle that is a predetermined number of times the transmission cycle, in order to maintain synchronization of the wireless communication in which the synchronization is established between the base wireless device and the remote wireless device, and a synchronization unit configured to, in a case that the synchronization maintenance signal has been received by the communication unit, correct a generation timing of a clock signal of the remote wireless device and to maintain the synchronization of the wireless communication, wherein the predetermined number is an integer of 1 or more, the reception cycle is a sum of a first period in which the communication unit receives the synchronization maintenance signal and a second period in which the communication unit does not receive the synchronization maintenance signal, and the first period is a period including one or more of the predetermined cycles included in the reception cycle.

A second aspect of the present invention is characterized by a wireless communication system including the remote wireless device according to the first aspect, and the base wireless device configured to transmit the synchronization maintenance signal and another signal other than the synchronization maintenance signal, wherein in a case that transmission of the synchronization maintenance signal and transmission of the other signal are in contention, the base wireless device gives priority to the transmission of the synchronization maintenance signal.

According to the present invention, synchronization of wireless communication is easily maintained.

The above and other objects, features, and advantages of the present invention will be easily understood from the following description of preferred embodiments, which will be described with reference to the accompanying drawings.

### BRIEF DESCRIPTION OF DRAWINGS

[FIG. 1] FIG. 1 is a diagram showing an example of the configuration of a wireless communication system including a base wireless device and a plurality of remote wireless devices;
[FIG. 2] FIG. 2 is a diagram illustrating a sequence of wireless communication carried out between the base wireless device and the remote wireless devices;
[FIG. 3] FIG. 3A and FIG. 3B are diagrams illustrating a change in internal voltage within the remote wireless device when synchronization of the wireless communication is maintained;
[FIG. 4] FIG. 4A and FIG. 4B are diagrams illustrating the relationship between a transmission cycle and a reception cycle of a synchronization maintenance signal;
[FIG. 5] FIG. 5 is a flowchart showing a synchronization maintenance processing procedure of the wireless communication in the remote wireless device;
[FIG. 6] FIG. 6 is a diagram illustrating a table used for changing a predetermined number in an exemplary modification 1 of the remote wireless device;
[FIG. 7] FIG. 7 is a diagram illustrating a first period in an exemplary modification 2;
[FIG. 8] FIG. 8A is a diagram showing an example in which data is transmitted in a first period in an exemplary modification 3; and FIG. 8B and FIG. 8C are diagrams illustrating a process of waiting for reception of a synchronization maintenance signal in the exemplary modification 3; and
[FIG. 9] FIG. 9 is a flowchart showing a priority transmission processing procedure at the time of transmission contention in a base wireless device of an exemplary modification 4.

### DETAILED DESCRIPTION OF THE INVENTION

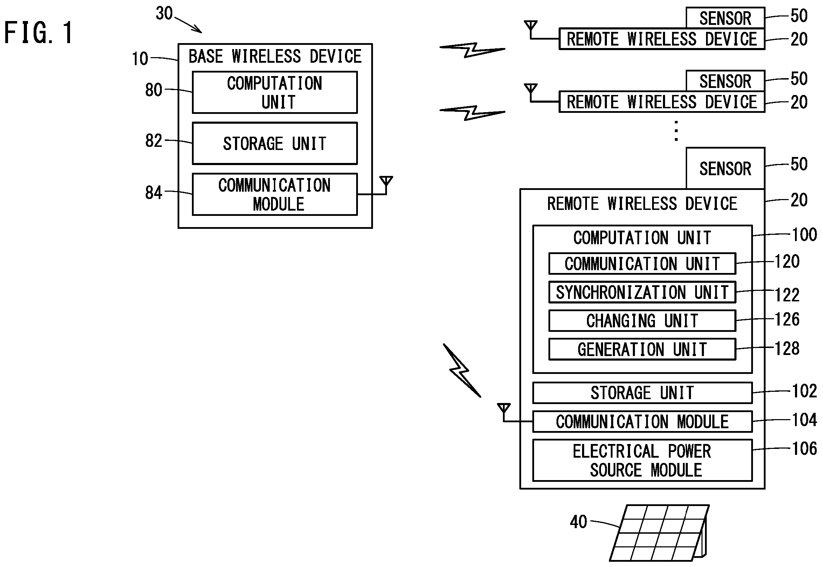

FIG. 1 is a diagram showing an example of the configuration of a wireless communication system 30 including a base wireless device 10 and a plurality of remote wireless devices 20. The wireless communication system 30 is used for wireless communication within an industrial facility, for example, as disclosed in JP 2017-188868 A. The base wireless device 10 is supplied with electrical power by a commercial electrical power source.

All of the plurality of remote wireless devices 20 are supplied with electrical power by a low output electrical power source 40. The low output electrical power source 40, for example, is an energy harvester, a wireless electrical power supplying facility, a small capacity battery, or the like. An energy harvester is a small scale electrical power generator that generates electrical power, for example, using light, sound, pressure, vibrations, or the like. There are cases in which the generated electrical power output of such electrical power generators may decrease depending on environmental conditions and the like.

In FIG. 1, an example is shown in which, as the low output electrical power source 40, there is used a small scale electrical power generator that generates electrical power using sunlight. In the case of an electrical power generator that uses sunlight, the generated electrical power output decreases as the amount of sunlight decreases. The voltage that is supplied internally to each of the plurality of remote wireless devices 20 is a low voltage on the order of several volts, and the voltage may change depending on the generated electrical power output of the low output electrical power source 40. In the present embodiment, the generated electrical power output of the low output electrical power source 40 is reduced due to a decrease in the hours of sunlight.

Wireless communication is carried out between the base wireless device 10 and each of the remote wireless devices 20. The base wireless device 10 is controlled by a non-illustrated control device that is connected by means of wires or wirelessly. The control device may be, for example, a PLC (Programmable Logic Controller) that monitors and controls an industrial facility.

A sensor signal is input from a sensor 50, which is an external device, to one of the remote wireless devices 20. The remote wireless device 20, based on the input sensor signal, transmits data DT to the base wireless device 10 by way of wireless communication. The base wireless device 10 transfers the data DT that is received from each of the remote wireless devices 20 to the above-mentioned control device. The control device uses the transferred data DT and thereby carries out data processing.

The base wireless device 10 includes a computation unit 80, a storage unit 82, and a communication module 84. The computation unit 80 includes a processor such as a CPU (Central Processing Unit) or a GPU (Graphics Processing Unit) or the like. More specifically, the computation unit 80 contains a processing circuitry.

The computation unit 80 may be realized by an integrated circuit such as an ASIC (Application Specific Integrated Circuit) or an FPGA (Field Programmable Gate Array) or the like, or alternatively, an electronic circuit including a discrete device.

The storage unit 82 includes a volatile memory such as a RAM (Random Access Memory) or the like, and a nonvolatile memory such as a ROM (Read Only Memory) or a flash memory or the like. The volatile memory is used as a working memory for the processor. The nonvolatile memory stores a program and the like to be executed by the processor.

The computation unit 80, by executing the aforementioned program that is stored in the storage unit 82, establishes the synchronization and maintains the synchronization of the wireless communication between itself and the remote wireless devices 20. Specifically, the computation unit 80 broadcasts via the communication module 84 a synchronization establishment signal SE in order to establish the synchronization of the wireless communication. After having established the synchronization of the wireless communication with the remote wireless devices 20, in order to maintain the synchronization thereof, the computation unit 80 broadcasts a synchronization maintenance signal SM via the communication module 84.

Further, by executing the aforementioned program that is stored in the storage unit 82, the computation unit 80, in a state in which the synchronization of the wireless communication is established or maintained, receives via the communication module 84 the aforementioned data DT between itself and the remote wireless devices 20. Moreover, in the wireless communication after having established the synchronization, the frequency is switched in a cyclical manner. Stated otherwise, in the wireless communication after having established the synchronization, a frequency hopping method is adopted. The communication module 84 is used in the aforementioned wireless communication.

Each of the remote wireless devices 20 comprises a computation unit 100, a storage unit 102, a communication module 104, and an electrical power source module 106. The computation unit 100 includes a processor such as a CPU, a GPU, or the like. More specifically, the computation unit 100 includes a processing circuitry. The storage unit 102 includes a volatile memory such as a RAM or the like, and a nonvolatile memory such as a ROM or a flash memory or the like. The volatile memory is used as a working memory for the processor. The nonvolatile memory stores a program and the like to be executed by the processor.

The communication module 104 is used in the aforementioned wireless communication. The electrical power source module 106 converts the electrical power from the low output electrical power source 40, and provides the electrical power within the remote wireless device 20.

The computation unit 100 comprises a communication unit 120, a synchronization unit 122, a changing unit 126, and a generation unit 128. The communication unit 120, the synchronization unit 122, the changing unit 126, and the generation unit 128 are realized by the computation unit 100 executing a program that is stored in the storage unit 102.

The communication unit 120 receives via the communication module 104 the synchronization establishment signal SE in order to establish the synchronization of the wireless communication. The communication unit 120 receives via the communication module 104 the synchronization maintenance signal SM in order to maintain the synchronization of the wireless communication. The communication unit 120 transmits to the base wireless device 10 via the communication module 104 the data DT that is generated by the later-described generation unit 128. The communication unit 120 receives via the communication module 104 a confirmation acknowledgement signal ACK that is transmitted from the base wireless device 10 with respect to the data DT that was transmitted.

In the case that the synchronization establishment signal SE has been received by the communication unit 120, the synchronization unit 122 synchronizes the generation timing of a clock signal of the remote wireless device 20 with the generation timing of a clock signal of the base wireless device 10. In the case that the synchronization maintenance signal SM has been received by the communication unit 120, the synchronization unit 122 corrects the generation timing of the clock signal of the remote wireless device 20, and thereby maintains the synchronization of the wireless communication with the base wireless device 10.

In accordance therewith, after the synchronization is established, in principle, by way of frequency hopping, the switching timing of the frequencies can be made to coincide in the base wireless device 10 and the remote wireless device 20. In order to maintain this coincidence, the synchronization maintenance signal SM is transmitted in a cyclical manner.

As described later, the reception cycle in which the communication unit 120 receives the synchronization maintenance signal SM is a predetermined number N times the transmission cycle in which the base wireless device 10 transmits the synchronization maintenance signal SM. The predetermined number N is an integer of 1 or more. The changing unit 126 changes the predetermined number N according to whether or not the synchronization maintenance signal SM is received by the communication unit 120.

The generation unit 128, based on the sensor signal input from the sensor 50, generates the data DT to be transmitted to the base wireless device 10.

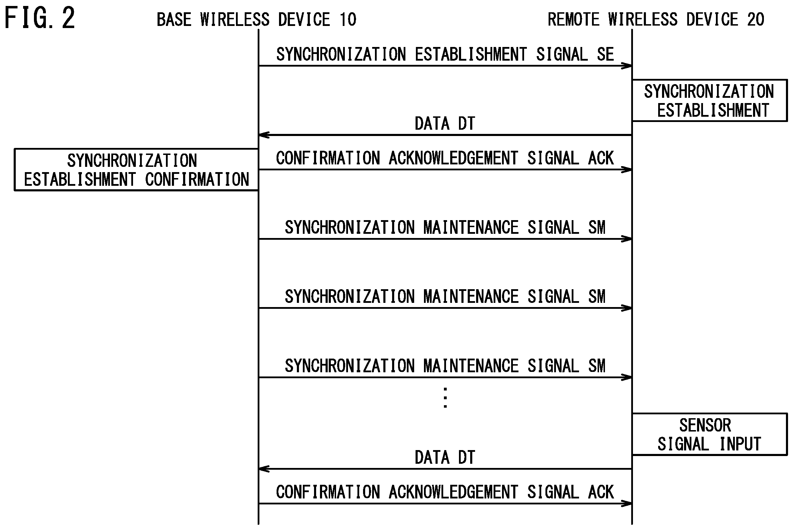

FIG. 2 is a diagram illustrating a sequence of the wireless communication carried out between the base wireless device 10 and one of the remote wireless devices 20. At the beginning of the sequence, the synchronization of the wireless communication is established. Therefore, the computation unit 80 of the base wireless device 10, via the communication module 84, transmits the synchronization establishment signal SE in a cyclical manner by way of broadcasting using a predetermined frequency. The transmission cycle of the synchronization establishment signal SE is a value within the range of roughly 1 to 1000 [ms], and for example, is 250 [ms]. The synchronization establishment signal SE includes information of the clock of the base wireless device 10.

The communication unit 120 of the remote wireless device 20 waits for and receives via the communication module 104 the synchronization establishment signal SE from the base wireless device 10 at the aforementioned predetermined frequency. The synchronization unit 122 of the remote wireless device 20, based on the information contained in the synchronization establishment signal SE, synchronizes the clock of the remote wireless device 20 with the clock of the base wireless device 10. In accordance therewith, in the remote wireless device 20, the synchronization of the wireless communication with the base wireless device 10 is established.

In the case that there is a sensor signal from the sensor 50, then based on the sensor signal, the generation unit 128 of the remote wireless device 20 generates the data DT to be transmitted to the base wireless device 10. Moreover, it should be noted that dummy data DT that is not based on a sensor signal may also be generated. The communication unit 120 of the remote wireless device 20, via the communication module 104, transmits the data DT to the base wireless device 10.

The computation unit 80 of the base wireless device 10, via the communication module 84, receives the data DT from the remote wireless device 20. In accordance therewith, in the base wireless device 10, the synchronization of the wireless communication with the remote wireless device 20 is established. The computation unit 80 of the base wireless device 10, via the communication module 84, transmits the confirmation acknowledgement signal ACK to the remote wireless device 20. The communication unit 120 of the remote wireless device 20, via the communication module 104, receives the confirmation acknowledgement signal ACK from the base wireless device 10.

After having established the synchronization of the wireless communication, in a manner so as to maintain the synchronization thereof, the computation unit 80 of the base wireless device 10, via the communication module 84, broadcasts in a cyclical manner the synchronization maintenance signal SM. The transmission cycle Tt of the synchronization maintenance signal SM is a value within the range of roughly 1 to 1000 [ms], and for example, is 100 [ms]. The synchronization maintenance signal SM includes information of the clock of the base wireless device 10.

The communication unit 120 of the remote wireless device 20, via the communication module 104, receives in a cyclical manner the synchronization maintenance signal SM from the base wireless device 10. The synchronization unit 122 of the remote wireless device 20, based on the information contained in the synchronization maintenance signal SM, corrects the clock of the remote wireless device 20, and thereby maintains the synchronization of the wireless communication with the base wireless device 10.

In a state in which the synchronization of the wireless communication is maintained, it is assumed that the sensor signal is input from the sensor 50 to the remote wireless device 20. In that case, the generation unit 128 of the remote wireless device 20, based on the sensor signal, generates the data DT to be transmitted to the base wireless device 10. The communication unit 120 of the remote wireless device 20 transmits the data DT to the base wireless device 10.

The computation unit 80 of the base wireless device 10 receives the data DT from the remote wireless device 20. The computation unit 80 of the base wireless device 10 transmits the confirmation acknowledgement signal ACK to the remote wireless device 20. The communication unit 120 of the remote wireless device 20 receives the confirmation acknowledgement signal ACK from the base wireless device 10. The reception of the confirmation acknowledgement signal ACK implies that the data DT has been successfully transmitted from the remote wireless device 20 to the base wireless device 10.

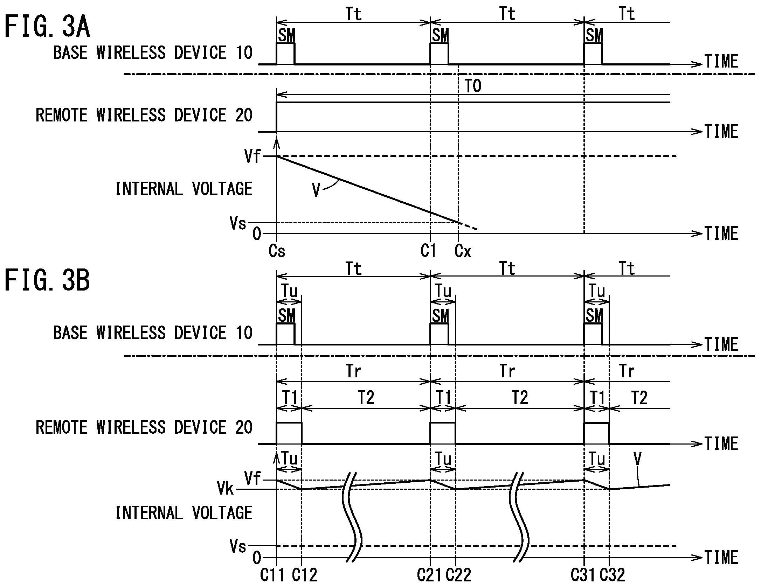

FIG. 3A and FIG. 3B are diagrams illustrating a change in internal voltage V within the remote wireless device 20 when synchronization of the wireless communication is maintained. The remote wireless device 20 stands by for the synchronization maintenance signal SM from the base wireless device 10 in a cyclical manner. In a conventional example shown in FIG. 3A, a standby period T0 for the remote wireless device 20 to stand by for reception of the synchronization maintenance signal SM continues so that the synchronization maintenance signal SM is repeatedly received.

In the case that the electrical power output of the low output electrical power source 40 is reduced, the internal voltage V in the remote wireless device 20 drops while the aforementioned standby period T0 elapses. As a result, a concern arises in that the internal voltage V may decrease from a voltage value Vf of about several volts to a voltage value Vs or less at which system outage of the remote wireless device 20 may occur.

In the conventional example shown in FIG. 3A, the base wireless device 10 transmits the synchronization maintenance signal SM at each transmission cycle Tt. At time Cs, the remote wireless device 20 starts standing by for reception of the synchronization maintenance signal SM. The remote wireless device 20 receives the synchronization maintenance signal SM transmitted from the base wireless device 10 twice, at time Cs and at time C1 after time Cs. Thereafter, the standby period T0 continues, for the remote wireless device 20 receiving the next synchronization maintenance signal SM. Therefore, the internal voltage V continues to decrease from the voltage value Vf at time Cs.

In the conventional example shown in FIG. 3A, the internal voltage V becomes a voltage value Vs at which the system outage of the remote wireless device 20 may occur at time Cx after the synchronization maintenance signal SM has been received twice. Therefore, in an environment in which the electrical power is supplied from the low output electrical power source 40, it is not preferable for the standby period T0 to continue.

In an example according to the present embodiment shown in FIG. 3B, the system outage of the remote wireless device 20 does not occur. In a similar manner to the example shown in FIG. 3A, the base wireless device 10 transmits the synchronization maintenance signal SM at each transmission cycle Tt.

The computation unit 80 of the base wireless device 10 and the computation unit 100 of the remote wireless device 20 are capable of carrying out the transmission and reception of signals to and from each other at each predetermined cycle Tu. The predetermined cycle Tu is a value within the range of roughly 1 to 5 [ms], and for example, is 5 [ms]. The transmission cycle Tt of the synchronization maintenance signal SM from the base wireless device 10 is a multiple of the predetermined cycle Tu. For example, when the transmission cycle Tt = 100 [ms] and the predetermined cycle Tu = 5 [ms], the transmission cycle Tt is 20 times the predetermined cycle Tu.

In the example shown in FIG. 3B, it is assumed that the synchronization maintenance signal SM is transmitted from the base wireless device 10 at time C11. The communication unit 120 of the remote wireless device 20 receives the synchronization maintenance signal SM that reaches the remote wireless device 20 in the first period T1. That is, the first period T1 is a period in which the communication unit 120 receives the synchronization maintenance signal SM. As shown in FIG. 3B, the first period T1 is one predetermined cycle Tu that starts at time C11, which is the same time as the transmission of the synchronization maintenance signal SM, and ends at time C12 after time C11.

When the communication unit 120 receives the synchronization maintenance signal SM, a timer, a counter, or the like (not illustrated) disposed in a peripheral circuit of the computation unit 100 is initiated. Hereinafter, the timer, the counter, or the like is simply referred to as a timer. Note that the sleep state is canceled at the timing when the timer expires.

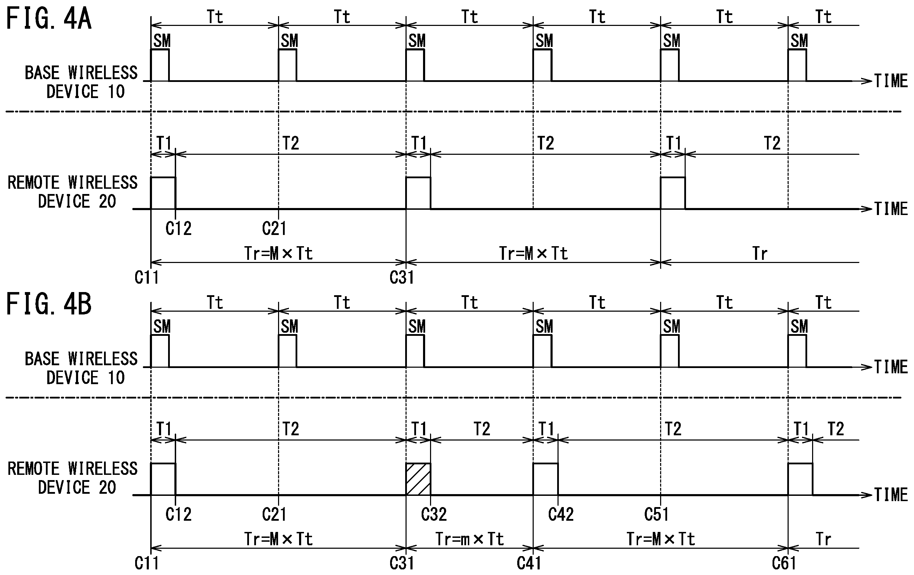

After the first period T1 ends, the second period T2 is started. The second period T2 is a period in which the communication unit 120 does not receive the synchronization maintenance signal SM. Therefore, even if the synchronization maintenance signal SM reaches the remote wireless device 20 in the second period T2, the communication unit 120 of the remote wireless device 20 does not receive the synchronization maintenance signal SM as described later with reference to FIG. 4A. This is realized by, for example, the operation mode of the computation unit 100 of the remote wireless device 20 changing from a normal mode to a sleep mode.

A description will be given concerning the normal mode and the sleep mode. In the normal mode, the communication unit 120, the synchronization unit 122, the changing unit 126, and the generation unit 128 of the computation unit 100 can each carry out the aforementioned processes that were described using FIG. 1. By the electrical power source of the computation unit 100 being turned OFF, a sleep process is executed. When the sleep process is executed and the operation mode of the computation unit 100 becomes the sleep mode, the communication unit 120, the synchronization unit 122, the changing unit 126, and the generation unit 128 each become a state in which they do not carry out the aforementioned processes. At a timing at which the operation mode of the computation unit 100 becomes the sleep mode, the second period T2 is started. The operation mode of the computation unit 100 is the normal mode in the first period T1 and is the sleep mode in the second period T2.

The internal voltage V within the remote wireless device 20 decreases from the voltage value Vf in the first period T1 from time C11. As shown in FIG. 3B, since the first period T1 ends at time C12, and the voltage drop of the internal voltage V stops at a voltage value Vk that is higher than the voltage value Vs. In the second period T2 from time C12 to time C21, the internal voltage V increases and is restored to the voltage value Vf. At time C21, the second period T2 ends and the first period T1 starts again.

As noted previously, the sleep state is canceled at the timing when the timer expires. That is, the second period T2 ends at the timing when the timer expires. Based on the expiration of the timer, a signal is input from the peripheral circuit in which the timer is arranged to the electrical power source of the computation unit 100. In accordance therewith, the electrical power source of the computation unit 100 is turned ON. By the electrical power source of the computation unit 100 being turned ON, the sleep state is cancelled. When the sleep state is cancelled and the operation mode of the computation unit 100 becomes the normal mode, the communication unit 120, the synchronization unit 122, the changing unit 126, and the generation unit 128 each return to a state in which they are capable of carrying out the aforementioned processes.

As described above, the second instance of the first period T1, which was started at time C21, comes to an end at time C22 as illustrated in FIG. 3B. The communication unit 120 receives a second synchronization maintenance signal SM that has reached the remote wireless device 20 in the second instance of the first period T1. The internal voltage V drops from the voltage value Vf at time C21 to the voltage value Vk at time C22.

A second instance of the second period T2 is started at time C22 and ends at time C31. During the second instance of the second period T2, the sleep process is executed again, and thus the internal voltage V rises from the voltage value Vk at time C22 to the voltage value Vf at time C31. In a third instance of the first period T1 that is started at time C31 and ends at time C32, a third synchronization maintenance signal SM is received by the communication unit 120.

Thus, the internal voltage V drops to the voltage value Vk again in the first period T1, but restored to the voltage value Vf again in the next second period T2. Thereafter, the first period T1 and the second period T2 are alternately repeated in the same manner. Since the internal voltage V is maintained in a state of not dropping to the voltage value Vs, it is possible to prevent the occurrence of a system outage of the remote wireless device 20. Therefore, the synchronization of the wireless communication can be maintained.

The communication unit 120 can receive the synchronization maintenance signal SM in the first period T1 at each of the reception cycles Tr. A period from the start timing of the first period T1 to the start timing of the next first period T1 is a reception cycle Tr. That is, the reception cycle Tr is the sum of the first period T1 and the second period T2. The first period T1 and the second period T2 are alternately repeated, and thus the communication unit 120 receives the synchronization maintenance signal SM at each of the reception cycles Tr. In this way, the wireless communication between the base wireless device 10 and the remote wireless device 20 is maintained.

The reception cycle Tr is a predetermined number N times the transmission cycle Tt. The predetermined number N is an integer of 1 or more. The communication unit 120 can receive the synchronization maintenance signal SM at each of the reception cycles Tr. In the example shown in FIG. 3B, the predetermined number N is 1. As the predetermined number N is larger, the restoration of the internal voltage V of the remote wireless device 20 can be expected more. Therefore, the predetermined number N is preferably an integer of 2 or more. However, the predetermined number N is determined such that the synchronization of the wireless communication is not lost even when the predetermined number N is a large integer.

FIG. 4A and FIG. 4B are diagrams illustrating the relationship between the transmission cycle Tt and the reception cycle Tr of the synchronization maintenance signal SM. In FIG. 4A and FIG. 4B, the times for which the same reference numerals (for example, C11) are used represent the same timing. As described above, the reception cycle Tr is a predetermined number N times the transmission cycle Tt. A predetermined number N is set as a predetermined set value M. In this regard, however, M >= 2. In this case, the communication unit 120 of the remote wireless device 20 receives the synchronization maintenance signal SM transmitted from the base wireless device 10 at each transmission cycle Tt once every M times, and does not receive the remaining synchronization maintenance signals SM. FIG. 4A shows an example of a case where the set value M = 2.

In the example shown in FIG. 4A, the reception cycle Tr is twice the transmission cycle Tt of the synchronization maintenance signal SM. The first instance of the first period T1 starting at time C11 ends at time C12. In the first instance of the first period T1, the communication unit 120 receives a first synchronization maintenance signal SM that was transmitted from the base wireless device 10 at time C11.

A second synchronization maintenance signal SM is transmitted from the base wireless device 10 at time C21. However, in the first instance of the second period T2 from time C12 to time C31, the operation mode of the computation unit 100 is the sleep mode. Therefore, the communication unit 120 does not perform the reception process of the second synchronization maintenance signal SM. In the example shown in FIG. 4A, the second period T2 is longer than that in the example shown in FIG. 3B. During the second period T2, the internal voltage V of the remote wireless device 20 may rise and be restored.

Therefore, the possibility of preventing the occurrence of a system outage of the remote wireless device 20 is further increased. As a result, the synchronization of the wireless communication is more easily maintained. The same applies to the reception cycles Tr (the first periods T1 and the second periods T2) repeated after time C31 in FIG. 4A. The synchronization maintenance signal SM is received once every two times, and the remaining synchronization maintenance signal SM is not received.

An instability in the wireless communication can often take place. In an unstable communication environment, a signal that is transmitted from the base wireless device 10 may not be received by the remote wireless device 20, and data may be lost. Further, apart therefrom, when the aforementioned frequency switching is carried out, since the frequency is in use by another device, the base wireless device 10 may not be capable of transmitting a signal at each transmission cycle Tt that is mentioned above.

In the example shown in FIG. 4B, the processing of the remote wireless device 20 for two synchronization maintenance signals SM in the first reception cycle Tr from time C11 to time C31 is the same as the processing in the example shown in FIG. 4A. As shown in FIG. 4B, it is assumed that the remote wireless device 20 does not receive a third synchronization maintenance signal SM, which is supposed to be transmitted from the base wireless device 10 at time C31, in the second instance of the first period T1 from time C31 to time C32.

When the synchronization maintenance signal SM is not received by the communication unit 120, the changing unit 126 changes the predetermined number N. The changing unit 126 changes the predetermined number N to an integer m smaller than a predetermined set value M. In the example shown in FIG. 4B, the set value M = 2 and the integer m = 1. That is, the changing unit 126 changes the predetermined number N from 2 to 1 at time C32.

Therefore, the reception cycle Tr is changed from twice the transmission cycle Tt to once the transmission cycle Tt. When the first period T1 is not changed, the reception cycle Tr is changed by changing the second period T2. That is, the changing unit 126 changes the setting of the peripheral circuit in which the timer is disposed, and the timer determines the timing at which the second period T2 ends.

In the example shown in FIG. 4B, the second reception cycle Tr started at time C31 is equal to the transmission cycle Tt, and ends at time C41. More specifically, the second instance of the time second period T2 is shortened, and the sleep process executed at time C32 is canceled at time C41. Therefore, the communication unit 120 receives a fourth synchronization maintenance signal SM transmitted from the base wireless device 10 at time C41 in the first period T1 from time C41 to time C42.

Accordingly, the communication unit 120 can receive the synchronization maintenance signal SM earlier than in a case where the second period T2 is not shortened. Therefore, it is possible to reduce the risk of losing synchronization of wireless communication. Even when the set value M is a value larger than 2, the integer m is preferably 1.

As shown in FIG. 4B, in the case that the synchronization maintenance signal SM is received in the third instance of the first period T1 after the changing unit 126 has changed the predetermined number N, the changing unit 126 returns the predetermined number N to the set value M. That is, the changing unit 126 returns the predetermined number N from 1 to 2. Therefore, the reception cycle Tr is changed from once the transmission cycle Tt to twice the transmission cycle Tt again.

The third reception cycle Tr started at time C41 ends not at time C51 corresponding to the time equal to the transmission cycle Tt but at time C61 corresponding to the time twice the transmission cycle Tt. More specifically, the third instance of the second period T2 is returned to the length equal to the first instance of the second period T2, and the sleep process executed at time C42 is canceled at time C61. At time C51 within the third instance of the second period T2, a fifth synchronization maintenance signal SM is transmitted from the base wireless device 10. The communication unit 120 does not perform the reception process of the fifth synchronization maintenance signal SM. The description of the reception cycle Tr (the first period T1 and the second period T2) repeated after time C61 in FIG. 4B will be omitted.

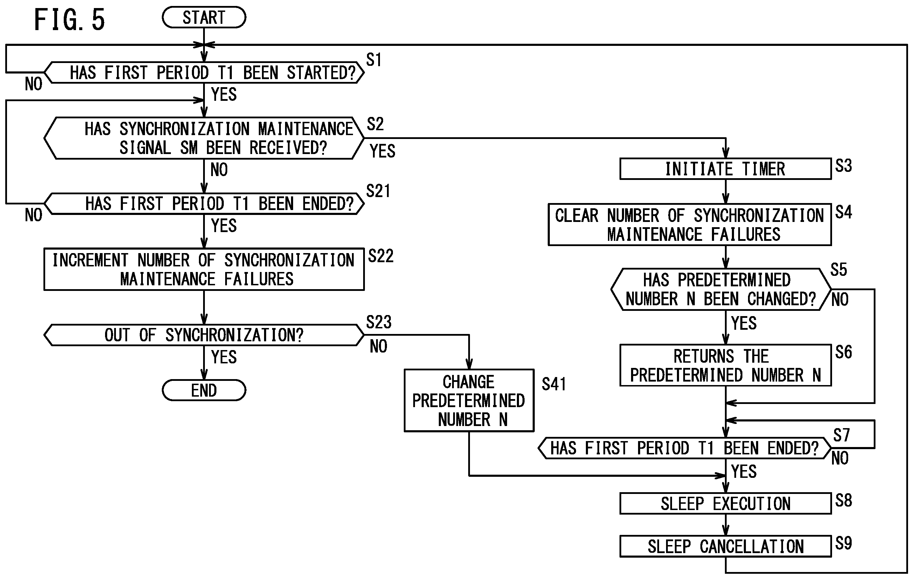

FIG. 5 is a flowchart showing a synchronization maintenance processing procedure of the wireless communication in the remote wireless device 20. The present processing procedure is carried out, for example, by the computation unit 100 of the remote wireless device 20. When the present processing procedure is started, the communication unit 120 determines whether or not the first period T1 has been started in step S1. When the predetermined cycle Tu is started after the start of the present processing procedure or after the sleep state cancellation, it is determined that the first period T1 is started. In the case that the determination has become YES in step S1, the present processing procedure proceeds to step S2. In the case that the determination has become NO in step S1, the process of step S1 is repeated.

In step S2, the communication unit 120 determines whether or not the synchronization maintenance signal SM has been received. In the case that the determination has become YES in step S2, the present processing procedure proceeds to step S3. In the case that the determination has become NO in step S2, the present processing procedure proceeds to step S21. In step S3, the communication unit 120 initiates a timer. In step S4, the communication unit 120 clears the number of synchronization maintenance failures stored in the storage unit 102. The number of synchronization maintenance failures indicates the number of times the communication unit 120 has failed to receive the synchronization maintenance signal SM in succession.

In step S5, the changing unit 126 determines whether or not the predetermined number N has been changed from the set value M to the integer m. In the case that the determination has become YES in step S5, the present processing procedure proceeds to step S6. In the case that the determination has become NO in step S5, the present processing procedure proceeds to step S7.

In step S6, the changing unit 126 returns the predetermined number N from the integer m to the set value M. More specifically, the changing unit 126 changes the setting of the timer, thereby changing the length of the second period T2. In step S7, the communication unit 120 determines whether or not the first period T1 has been ended. As described above, in the present embodiment, the first period T1 is one predetermined cycle Tu. Therefore, when the predetermined cycle Tu started in step S1 ends, it is determined that the first period T1 has ended. In the case that the determination has become YES in step S7, the present processing procedure proceeds to step S8. In the case that the determination has become NO in step S7, the process of step S7 is repeated.

In step S8, by the electrical power source of the computation unit 100 being turned OFF, a sleep process is executed. The operation mode of the computation unit 100 is set to the sleep mode. That is, the second period T2 starts. Thereafter, when the timer initiated in step S3 expires, in step S9, by the electrical power source of the computation unit 100 being turned ON, the sleep mode is cancelled and the second period T2 ends. In accordance with the process of step S9, when the operation mode of the computation unit 100 returns to the normal mode, the present processing procedure returns to step S1.

In step S21, the communication unit 120 determines whether or not the first period T1 has been ended. In the case that the determination has become YES in step S21, the present processing procedure proceeds to step S22. In the case that the determination has become NO in step S21, the present processing procedure returns to step S2. In step S22, the communication unit 120 increments the above-described number of synchronization maintenance failures. In step S23, the communication unit 120 determines whether or not the wireless communication between the base wireless device 10 and the remote wireless device 20 has become out of synchronization. In the case that the determination has become YES in step S23, the present processing procedure comes to an end. In the case that the determination has become NO in step S23, the present processing procedure proceeds to step S41.

In step S41, the changing unit 126 changes the predetermined number N from the set value M to an integer m (where M > m). More specifically, the second period T2 is shortened by the changing unit 126 changing the setting of the timer. When the process of step S41 is completed, the process proceeds to step S8. The process of step S41 may be performed before the determination process of step S21. In the case that the determination has become NO in step S23, the present processing procedure proceeds to the aforementioned step S8.

### [Exemplary Modifications]

The above-described embodiment may be modified in the following manner.

### (Exemplary Modification 1)

In the above embodiment, the changing unit 126 changes the predetermined number N depending on whether or not the synchronization maintenance signal SM is received by the communication unit 120. However, the changing unit 126 may change the predetermined number N according to the ratio R of the number of times Fr the synchronization maintenance signal SM is received by the communication unit 120 to the number of times Fc the reception cycle Tr is repeated.

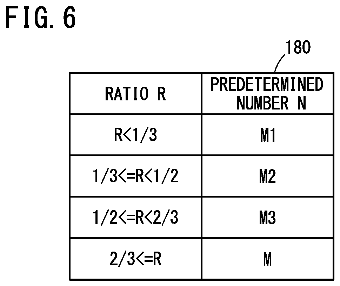

FIG. 6 is a diagram illustrating a table 180 used for changing the predetermined number N in the present exemplary modification of the remote wireless device 20. The table 180 is stored in the storage unit 102. The table 180 records the value of the predetermined number N that is changed according to the ratio R. The smaller the ratio R becomes, the higher the risk of loss of synchronization is. Therefore, the predetermined number N becomes a smaller value as the ratio R becomes smaller so that the risk of the loss of synchronization is reduced.

In the example shown in FIG. 6, when the ratio R is smaller than 1/3, the predetermined number N is changed to a minimum value M1. When the ratio R is equal to or greater than 1/3 and less than 1/2, the predetermined number N is changed to M2, which is greater than the minimum value M1. When the ratio R is equal to or greater than 1/2 and less than 2/3, the predetermined number N is changed to M3, which is greater than M2. When the ratio R is equal to or greater than 2/3, the initial set value M is used as the predetermined number N. The set value M is greater than a value M3.

In the present exemplary modification, the predetermined number N is changed according to the ratio R. This prevents the predetermined number N from being repeatedly changed in accordance with temporary disturbance of wireless communication or the like. Therefore, it is possible to suppress power consumption due to the repetition of the change of the predetermined number N.

### (Exemplary Modification 2)

In the above embodiment, as shown in FIG. 3B, the first period T1 is one predetermined cycle Tu included in the reception cycle Tr. However, there may be a case where the transmission of the synchronization maintenance signal SM from the base wireless device 10 to the remote wireless device 20 is performed before or after the transmission cycle Tt due to instability of wireless communication. Therefore, the first period T1 may be a period including two or more predetermined cycles Tu included in the reception cycle Tr.

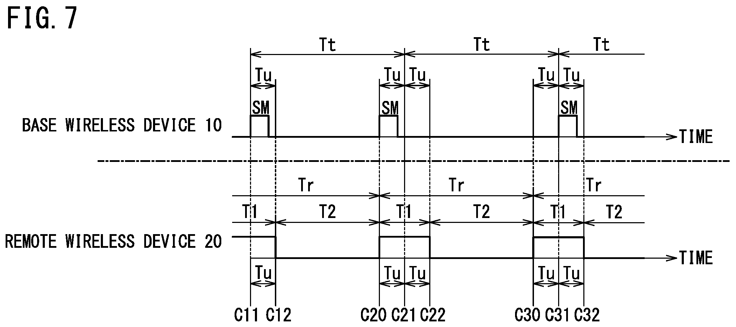

FIG. 7 is a diagram illustrating a first period T1 in the present exemplary modification. In FIG. 7 and FIG. 3B, the times for which the same reference numerals (for example, C11) are used represent the same timing. In the example illustrated in FIG. 7, the synchronization maintenance signal SM that is supposed to be transmitted from the base wireless device 10 at time C21 is transmitted at time C20 before the elapse of transmission cycle Tt that starts at time C11. The time C20 is earlier than the time C21 by one predetermined cycle Tu. It is preferable for the synchronization maintenance signal SM transmitted at time C20 to be received by the communication unit 120.

Therefore, the first period T1 may be started at time C20 instead of time C21. In this case, unlike the case of FIG. 3B, as shown in FIG. 7, the first period T1 includes not only the predetermined cycle Tu started at time C21 but also the predetermined cycle Tu started at time C20. The first period T1 starting at time C20 ends at time C22. Similarly, the next first period T1 is started at time C30 that is one predetermined cycle Tu before time C31, and ends at time C32. That is, each first period T1 repeated at each reception cycle Tr includes two predetermined cycles Tu. Thus, the remote wireless device 20 easily receives the synchronization maintenance signal SM.

The synchronization maintenance signal SM may be transmitted at time C22 after time C21. Therefore, the first period T1 may further include a predetermined cycle Tu (not shown) that starts at time C22. Similarly, the next first period T1 may further include a predetermined cycle Tu (not shown) that starts at time C32. In these cases, the first period T1 includes three predetermined cycles Tu. Thus, the remote wireless device 20 more easily receives the synchronization maintenance signal SM.

### (Exemplary Modification 3)

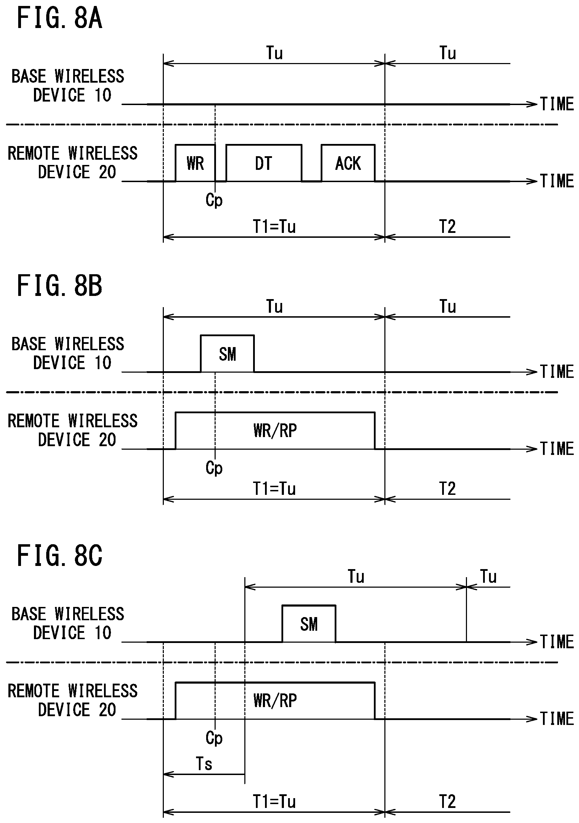

In the above embodiment, there is a case where a sensor signal is input from the sensor 50 to the remote wireless device 20 within a period of one predetermined cycle Tu corresponding to a first period T1. In this case, the data DT may be transmitted in the first period T1. FIG. 8A is a diagram showing an example in which the data DT is transmitted in the first period T1 in the present exemplary modification. As described above, the first period T1 corresponds to one predetermined cycle Tu.

The predetermined cycle Tu of the base wireless device 10 and the predetermined cycle Tu of the remote wireless device 20 are repeated at substantially equal timing. The start of the predetermined cycle Tu is the start timing of the first period T1. After the first period T1 is started, the communication unit 120 of the remote wireless device 20 performs a preliminary process and then performs a reception waiting process WR for waiting for reception of the synchronization maintenance signal SM.

In this case, it is assumed that the communication unit 120 does not receive the synchronization maintenance signal SM by the predetermined timing Cp after the first period T1 is started. It is also assumed that the generation unit 128 has generated the data DT to be transmitted to the base wireless device 10. In this case, the communication unit 120 transmits to the base wireless device 10 via the communication module 104 the data DT that is generated by the generation unit 128. Therefore, it is possible to suppress a transmission delay of the generated data DT.

The communication unit 120 receives via the communication module 104 a confirmation acknowledgement signal ACK from the base wireless device 10. Thereafter, the sleep process is executed at a timing equal to the start of a new predetermined cycle Tu. This timing is the start timing of the second period T2.

Unlike the example illustrated in FIG. 8A, there is a case where no sensor signal is input from the sensor 50 to the remote wireless device 20 within the first period T1. In this case, the reception waiting process WR of the synchronization maintenance signal SM by the communication unit 120 may be continued. FIGS. 8B and 8C are diagrams illustrating the reception waiting process WR of the synchronization maintenance signal SM in the present exemplary modification.

In the example shown in FIG. 8B, the predetermined cycle Tu of the base wireless device 10 and the predetermined cycle Tu of the remote wireless device 20 are repeated at substantially equal timing. The start of the predetermined cycle Tu is the start timing of the first period T1. After the first period T1 is started, the communication unit 120 of the remote wireless device 20 performs a preliminary process and then performs the reception waiting process WR for waiting for reception of the synchronization maintenance signal SM.

In the case that the communication unit 120 starts receiving the synchronization maintenance signal SM by the predetermined timing Cp, the reception waiting process WR of the synchronization maintenance signal SM by the communication unit 120 is switched to the reception process RP of the synchronization maintenance signal SM by the communication unit 120. When the first period T1 ends, the sleep process is executed at a timing equal to the start of a new predetermined cycle Tu. This timing is the start timing of the second period T2.

As described above, the electrical power output of the low output electrical power source 40 may decrease. In this case, when a high-precision clock circuit is used in the remote wireless device 20, a voltage drop of the internal voltage V in the remote wireless device 20 may occur. In order to prevent the voltage drop, the accuracy of the clock in the remote wireless device 20 may be low.

The clock signal of the remote wireless device 20 may fluctuate due to the clock with low precision. In this case, it is not always possible for the communication unit 120 to start receiving the synchronization maintenance signal SM by the predetermined timing Cp. Due to the occurrence of the fluctuation in the clock signal of the remote wireless device 20, the start of the predetermined cycle Tu of the base wireless device 10 and the start of the predetermined cycle Tu of the remote wireless device 20 may be slightly shifted from each other.

In the example shown in FIG. 8C, the start of the predetermined cycle Tu of the remote wireless device 20 is earlier than the start of the predetermined cycle Tu of the base wireless device 10 by a period difference Ts. The start of the predetermined cycle Tu of the remote wireless device 20 is the start timing of the first period T1. After the first period T1 is started, the communication unit 120 of the remote wireless device 20 performs a preliminary process and then performs the reception waiting process WR for waiting for reception of the synchronization maintenance signal SM.

The period difference Ts is present between the predetermined cycle Tu of the base wireless device 10 and the predetermined cycle Tu of the remote wireless device 20. Therefore, the communication unit 120 does not receive the synchronization maintenance signal SM by the predetermined timing Cp. However, in the case that the data DT is not generated by the generation unit 128, the reception waiting process WR of the synchronization maintenance signal SM by the communication unit 120 is continued.

Therefore, the communication unit 120 can receive the synchronization maintenance signal SM that arrives with a delay of the period difference Ts. Accordingly, it is possible to reduce the risk of losing synchronization of wireless communication. When the first period T1 ends, the sleep process is executed at a timing equal to the start of a new predetermined cycle Tu. This timing is the start timing of the second period T2. Note that, in the case where the start of the predetermined cycle Tu of the remote wireless device 20 is later than the start of the predetermined cycle Tu of the base wireless device 10, the communication unit 120 may start receiving the synchronization maintenance signal SM by the predetermined timing Cp.

### (Exemplary Modification 4)

In the Exemplary Modification 2, as described above with reference to FIG. 7, the synchronization maintenance signal SM that should be transmitted from the base wireless device 10 at time C21 may be transmitted at the time shifted before or after the time C21. The computation unit 80 of the base wireless device 10 can transmit the synchronization maintenance signal SM and other signals other than the synchronization maintenance signal SM via the communication module 84. The priority of the synchronization maintenance signal SM may be set to the highest among the plurality of types of signals that can be transmitted from the base wireless device 10. This can improve the problem that the transmission time of the synchronization maintenance signal SM is shifted.

When the priority of the synchronization maintenance signal SM is set to the highest and the transmission of the synchronization maintenance signal SM and the transmission of another signal are in contention, the base wireless device 10 gives priority to the transmission of the synchronization maintenance signal SM. In this case, the remote wireless device 20 easily receives the synchronization maintenance signal SM. Therefore, it is possible to reduce the risk of losing synchronization of wireless communication.

If the transmission time of the synchronization maintenance signal SM is not shifted, the first period T1 may not be a period including a plurality of predetermined cycles Tu included in the reception cycle Tr. That is, as in the embodiment shown in FIG. 3B, the first period T1 may be one predetermined cycle Tu included in the reception cycle Tr. Since the first period T1 can be suppressed to be short, the second period T2 in which the operation mode of the computation unit 100 of the remote wireless device 20 is the sleep mode can be lengthened. Accordingly, the restoration of the internal voltage V of the remote wireless device 20 can be expected.

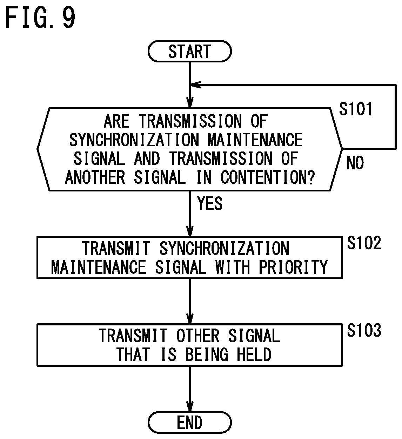

FIG. 9 is a flowchart showing a priority transmission processing procedure at the time of transmission contention in the base wireless device 10 of the present exemplary modification. The present processing procedure is carried out, for example, by the computation unit 80 of the base wireless device 10. When the present processing procedure is started, the computation unit 80 determines whether or not transmission of the synchronization maintenance signal SM and transmission of another signal are in contention in step S101. In the case that the determination has become YES in step S101, the present processing procedure proceeds to step S102. In the case that the determination has become NO in step S101, the process of step S101 is repeated.

In step S102, the computation unit 80 transmits the synchronization maintenance signal SM with priority and holds the other signal. In step S103, the computation unit 80 transmits the other signal that is being held in step S102. When the process of step S103 is completed, the present processing procedure comes to an end.

### (Exemplary Modification 5)

The Exemplary Modifications 1 to 4 described above may be combined as desired.

Concerning the above-described disclosure, the following supplementary notes are further disclosed.

### (Supplementary Note 1)

The remote wireless device (20) is capable of transmitting and receiving signals to and from the base wireless device (10) in the predetermined cycle (Tu) by way of wireless communication, and includes the communication unit (120) configured to receive the synchronization maintenance signal (SM) transmitted from the base wireless device in the transmission cycle (Tt) that is a multiple of the predetermined cycle, in the reception cycle (Tr) that is the predetermined number (N) of times the transmission cycle, in order to maintain synchronization of the wireless communication in which the synchronization is established between the base wireless device and the remote wireless device, and the synchronization unit (122) configured to, in the case that the synchronization maintenance signal has been received by the communication unit, correct the generation timing of the clock signal of the remote wireless device and to maintain the synchronization of the wireless communication, wherein the predetermined number is an integer of 1 or more, the reception cycle is a sum of the first period (T1) in which the communication unit receives the synchronization maintenance signal and the second period (T2) in which the communication unit does not receive the synchronization maintenance signal, and the first period is a period including one or more of the predetermined cycles included in the reception cycle. In accordance with such a configuration, synchronization of wireless communication is easily maintained.

### (Supplementary Note 2)

In the remote wireless device according to Supplementary Note 1, the predetermined number may be the integer of 2 or more. In accordance with such a configuration, it can be expected that the internal voltage of the remote wireless device will be restored.

### (Supplementary Note 3)

The remote wireless device according to Supplementary Note 2 may further include the changing unit (126) configured to change the predetermined number to the integer (m) smaller than the set value (M) set as the predetermined number in the case that the synchronization maintenance signal is not received by the communication unit in the first period, and to return the predetermined number to the set value in the case that the synchronization maintenance signal is received after the predetermined number has been changed. In accordance with such a configuration, it is possible to reduce a risk of losing synchronization of wireless communication.

### (Supplementary Note 4)

The remote wireless device according to Supplementary Note 1 may further include the changing unit (126) configured to change the predetermined number, depending on the ratio (R) of the number of times (Fr) that the synchronization maintenance signal is received by the communication unit to the number of times (Fc) that the reception cycle is repeated. In accordance with such a configuration, power consumption can be suppressed.

### (Supplementary Note 5)

The remote wireless device according to Supplementary Note 1 may further include the generation unit (128) configured to generate data (DT) to be transmitted to the base wireless device based on input information from the external device (50), wherein the communication unit may transmit the data generated by the generation unit to the base wireless device, and the communication unit may transmit the data in the case that the synchronization maintenance signal is not received by the predetermined timing (Cp) after the first period has been started and that the data has been generated by the generation unit. In accordance with such a configuration, it is possible to suppress a transmission delay of the generated data. In addition, in the case that the data has not been generated, the reception waiting process for the synchronization maintenance signal is continued, and thus it is possible to reduce the risk of losing synchronization of wireless communication.

### (Supplementary Note 6)

The wireless communication system (30) includes the remote wireless device according to any one of Supplementary Notes 1 to 5, and the base wireless device configured to transmit the synchronization maintenance signal and the other signal other than the synchronization maintenance signal, wherein in the case that the transmission of the synchronization maintenance signal and the transmission of the other signal are in contention, the base wireless device gives priority to the transmission of the synchronization maintenance signal. In accordance with such a configuration, it is possible to reduce a risk of losing synchronization of wireless communication in the remote wireless device.

### (Supplementary Note 7)

In the wireless communication system according to Supplementary Note 6, the first period may be the period of one of the predetermined cycles included in the reception cycle. In accordance with such a configuration, it can be expected that the internal voltage of the remote wireless device will be restored.

It should be noted that the present invention is not limited to the disclosure described above, and various configurations could be adopted therein without departing from the essence and gist of the present invention.

## Claims

1. A remote wireless device (20) that is capable of transmitting and receiving signals to and from a base wireless device (10) in a predetermined cycle (Tu) by way of wireless communication, the remote wireless device comprising:
a communication unit (120) configured to receive a synchronization maintenance signal (SM) transmitted from the base wireless device in a transmission cycle (Tt) that is a multiple of the predetermined cycle, in a reception cycle (Tr) that is a predetermined number (N) of times the transmission cycle, in order to maintain synchronization of the wireless communication in which the synchronization is established between the base wireless device and the remote wireless device; and
a synchronization unit (122) configured to, in a case that the synchronization maintenance signal has been received by the communication unit, correct a generation timing of a clock signal of the remote wireless device and to maintain the synchronization of the wireless communication,
wherein the predetermined number is an integer of 1 or more,
the reception cycle is a sum of a first period (T1) in which the communication unit receives the synchronization maintenance signal and a second period (T2) in which the communication unit does not receive the synchronization maintenance signal, and
the first period is a period including one or more of the predetermined cycles included in the reception cycle.

2. The remote wireless device according to claim 1, wherein the predetermined number is an integer of 2 or more.

3. The remote wireless device according to claim 2, further comprising a changing unit (126) configured to change the predetermined number to an integer (m) smaller than a set value (M) set as the predetermined number in a case that the synchronization maintenance signal is not received by the communication unit in the first period, and to return the predetermined number to the set value in a case that the synchronization maintenance signal is received after the predetermined number has been changed.

4. The remote wireless device according to claim 1, further comprising a changing unit (126) configured to change the predetermined number, depending on a ratio (R) of a number of times (Fr) that the synchronization maintenance signal is received by the communication unit to a number of times (Fc) that the reception cycle is repeated.

5. The remote wireless device according to claim 1, further comprising a generation unit (128) configured to generate data (DT) to be transmitted to the base wireless device based on input information from an external device (50),
wherein the communication unit transmits the data generated by the generation unit to the base wireless device, and
the communication unit transmits the data in a case that the synchronization maintenance signal is not received by a predetermined timing (Cp) after the first period has been started and that the data has been generated by the generation unit.

6. A wireless communication system (30) comprising:
the remote wireless device according to any one of claims 1 to 5; and
the base wireless device configured to transmit the synchronization maintenance signal and another signal other than the synchronization maintenance signal,
wherein in a case that transmission of the synchronization maintenance signal and transmission of the other signal are in contention, the base wireless device gives priority to the transmission of the synchronization maintenance signal.

7. The wireless communication system according to claim 6, wherein the first period is a period of one of the predetermined cycles included in the reception cycle.
